# EUROPEAN PATENT APPLICATION

(11) **EP 1 542 104 A1**
(43) Date of publication of application: **15.06.2005**
(21) Application number: 03771384.9
(22) Date of filing: 28.07.2003
(51) Int. Cl.: G05B 19/18, G06F 9/06

(54) **MACHINE TOOL PROGRAM UNAUTHORIZED USE PREVENTING DEVICE**

(30) Priority: 30.07.2002 JP 2002221377
(71) Applicant: Citizen Watch Co. Ltd., Tokyo 188-8511 (JP)
(72) Inventor: SHIBUI, Yutaka CITIZEN PRECISION MACHINERY CO.,Ltd, Kitasaku-gun, Nagano 389-0206 (JP); ISHIBASHI, Eiji C/O CITIZEN MECHATRONICS CO., LTD., Tokorozawa-shi, Saitama 359-1145 (JP)
(74) Representative: Patentanwälte Ruff, Wilhelm, Beier, Dauster & Partner
(86) International application number: PCT/JP2003/009542
(87) International publication number: WO 2004/012022

(57) **Abstract**

A program unauthorized-use preventing device (10) includes a storage section (12) for storing various optional operation programs in a machine tool, a display section (16) for displaying first and second program-selection images (14, 22) for selecting a desired operation program, and a processing section (20) for reading out the operation program selected on the first program-selection image from the storage section so as to be in a usable state when a device inherent password (18) is input and reading out the operation program selected on the second program-selection image from the storage section so as to be in a usable state when a machine-tool inherent password (24) is input.

## Description

### TECHNICAL FIELD

The present invention relates to a program unauthorized-use preventing device, for preventing the unauthorized-use of various optional operation programs in a machine tool.

### BACKGROUND ART

In the field of automatic control machine tools, such as numerically controlled machine tools, a configuration has been known in which certain programs, so called optional programs, other than basic operation programs, among various operation programs for causing desired operations to be carried out by movable structures such as a tool rest, a spindle, a table, etc., are brought into a usable state, only when a user select the optional programs as occasion demands. In general, such optional operation programs are previously stored in a storage section of a control device (such as a numerical control device) separately from the basic operation programs, and are selectable, as occasion demands, in a list-display page or image, displayed on a screen in a display section of the control device. Typically, in this configuration, the list display image for program selection is displayed only when an inherent password that has been set by the manufacturer of the control device is input to the control device, so that it is possible only for persons authorized to use software to select and use the desired operation programs.

For example, at the time of entering into a sales contract, a purchaser of an automatic control machine tool designates operation programs which will probably be necessary for him in the future, from among various optional operation programs that have been previously stored in a control device, and thereby obtains a use license of the designated operation programs. According to this designation, the manufacturer of the control device inputs a password to the control device so as to display a program-selection page or image on a screen, and selects the operation programs designated by the purchaser on the screen so as to bring them into a usable state. This password is set individually to correspond to the configuration of the control device and is, typically, a confidential information exclusively owned by the manufacturer of the control device, which is thus not disclosed to the manufacturer of the machine tool or to the purchaser.

In the above configuration wherein the password inherent to the control device must be input to bring the optional operation programs previously stored in the control device into a usable state, it is indispensable that the input operation of the password be performed by the manufacturer of the control device, even in the case where the purchaser of the machine tool wishes to newly obtain a use license on another occasion after purchasing. It is, however, desirable that the manufacturer of the machine tool be able to deal suitably with the above situation, as part of a maintenance service after the machine tool is introduced or purchased. Also, in the case where control devices having identical structures are installed into plural different machine tools, a common password is set to these control devices, so that if the password is discovered, there may arise the problem of unauthorized-use of operation programs for the plural machine tools, and significant efforts may thus be necessary as a countermeasure.

### DISCLOSURE OF THE INVENTION

It is an object of the present invention to provide a program unauthorized-use preventing device, in which, when obtaining the use licenses of various optional operation programs in a machine tool, the manufacturer of the machine tool is allowed to perform the operation for bringing an optionally selected operation program into a usable state, and which possesses a reinforced protective capability in relation to the unauthorized-use of operation programs.

In order to accomplish the above object, the present invention provides a program unauthorized-use preventing device, comprising a storage section for storing various optional operation programs in a machine tool; a display section for displaying a first program-selection image and a second program-selection image, separately from each other, a desired one of the operation programs being allowed to be selected on respective first and second program-selection images; and a processing section for processing to read out, when a device inherent password is input, the desired operation program selected on the first program-selection image from the storage section and bring the desired operation program into a usable state, while to read out, when a machine-tool inherent password different from the device inherent password is input, the desired operation program selected on the second program-selection image from the storage section and bring the desired operation program into a usable state.

In a preferred embodiment, the storage section includes a program storage area for storing the various optional operation programs and an image storage area for storing the first and second program-selection images; and the processing section processes to read out, when the device inherent password is input, the first program-selection image from the image storage area and make the display section display the first program-selection image, while to read out, when the machine-tool inherent password is input, the second program-selection image from the image storage area and make the display section display the second program-selection image.

It is advantageous that the processing section processes to bring, when selection of the operation program is performed respectively on the first and second program-selection images, only the desired operation program selected on the second program-selection image into a usable state.

Also, the program unauthorized-use preventing device may further comprise an interface section connectable to an external storage unit storing specific data; and, in this arrangement, the processing section may process, through the interface section, to identify the validity of the specific data stored in the external storage unit and bring, only when the specific data are judged to be valid, the desired operation program selected on the second program-selection image into a usable state.

Also, the program unauthorized-use preventing device may further comprise an interface section connectable to an external computer in turn connectable to an external storage unit storing specific data; and, in this arrangement, the processing section may process to bring, only when the external computer judges the specific data stored in the external storage unit to be valid, the desired operation program selected on the second program-selection image into a usable state.

The first and the second program-selection images may have an image composition basically identical to each other.

Further, the program unauthorized-use preventing device may be configured to be incorporated into a numerical control device.

### BRIEF DESCRIPTION OF THE DRAWINGS

The above and other objects, features and advantages of the present invention will become more apparent from the following description of preferred embodiments in connection with the accompanying drawings, in which:
Fig. 1 is a block diagram showing the configuration of a program unauthorized-use preventing device according to the present invention;
Fig. 2 is a block diagram showing an NC device, according to an embodiment of the present invention, configured to incorporate therein the program unauthorized-use preventing device of Fig. 1;
Fig. 3 is an illustration showing an exemplary program-selection image;
Fig. 4 is a flow chart showing one mode of a program unauthorized-use preventing procedure executed by the NC device of Fig. 2; and
Fig. 5 is a flow chart showing another mode of a program unauthorized-use preventing procedure executed by the NC device of Fig. 2.

### BEST MODES FOR CARRYING OUT THE INVENTION

The embodiments of the present invention are described below in detail, with reference to the accompanying drawings. In the drawings, the same or similar components are denoted by common reference numerals.

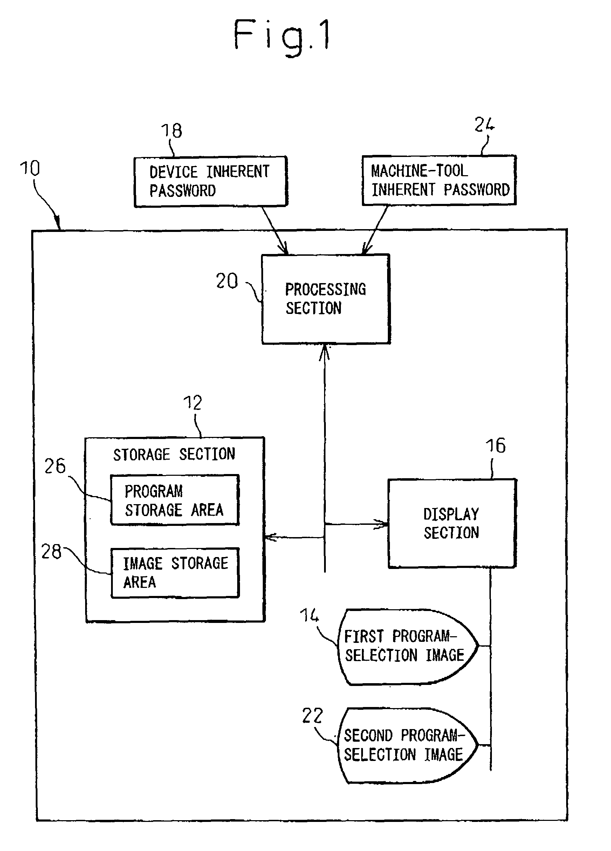

Referring to the drawings, Fig. 1 shows, as a block diagram, a program unauthorized-use preventing device 10 according to the present invention. The program unauthorized-use preventing device 10 is adapted to be installed in association with a control device for an automatic control machine tool, and includes a storage section 12 for storing various optional operation programs in the machine tool, a display section 16 for displaying a first program-selection image or page 14 for the selection of a desired operation program, and a processing unit 20 for processing to read out, when a device inherent password 18 is input, the desired operation program selected on the first program-selection image 14 from the storage section 12 and bring the desired operation program into a usable state. The device inherent password 18 is individually set by the manufacturer of the device so as to correspond to the configuration of the program unauthorized-use preventing device 10. The storage section 12, the display section 16 and the processing section 20 may be constructed respectively as a storage section, a display section and a processing section of, e.g., a numerical control (NC) device installed in a numerically controlled machine tool.

As the characteristic configuration of the present invention, the display section 16 is configured to display a second program-selection image or page 22 for the selection of a desired operation program, besides the first program-selection image 14. The processing section 20 processes to read out, when a machine-tool inherent password 24 different from the device inherent password 18 is input, the desired operation program selected on the second program-selection image 22 and bring the desired operation program into a usable state. It is possible for the manufacturer of the machine tool, to originally prepare the second program-selection image 22 independently of the first program-selection image 14. Also, the machine-tool inherent password 24 is inherent to the machine tool, into which the program unauthorized-use preventing device 10 is installed, and thus can be set originally by the manufacturer of the machine tool. The machine-tool inherent password 24 may be composed of, e.g., a combination of a random number and a number characteristic of the machine tool to which the device is installed, such as a serial number, a model number, dimensions of a machinable material, and the like.

According to the program unauthorized-use preventing device 10 having the above configuration, it is possible to optionally select a desired operation program and bring it into a usable state, by using the machine-tool inherent password 24 set by the manufacturer of the machine tool, and on the second program-selection image 22 prepared by the manufacturer of the machine tool. Therefore, in the case where, e.g., the purchaser of the machine tool wishes to newly obtain the use license of an operation program, it is possible for the manufacturer of the machine tool to quickly deal with this situation. Moreover, the machine-tool inherent password 24 is inherent to the machine tool to which the program unauthorized-use preventing device 10 is installed, so that even if program unauthorized-use preventing devices 10 having identical structures are installed in a plurality of different machine tools, it is possible to eliminate the problem of simultaneous occurrence of the unauthorized-use of operation programs in the plural machine tools unless the machine-tool inherent password 24 is individually decoded for the plural machine tools. In particular, in the case where the machine-tool inherent password 24 is composed of a combination of a random number and a number characteristic of the machine tool to which the device is installed, such as the serial number, and the like, the decoding of the password becomes difficult in itself, and the protective capability against the unauthorized-use of operation programs is thereby reinforced.

In the program unauthorized-use preventing device 10 as described above, the storage section 16 may include a program storage area 26 for storing the various optional operation programs, and an image storage area 28 for storing the first program-selection image 14 and the second program-selection image 22. The processing section 20 may thus process to read out, when the device inherent password 18 is input, the first program-selection image 14 from the image storage area 28 and make the display section 16 display the first program-selection image 14, while to read out, when the machine-tool inherent password 24 is input, the second program-selection image 22 from the image storage area 28 and make the display section 16 display the second program-selection image 22. According to this configuration, unless the accurate device inherent password 18 or the accurate machine-tool inherent password 24 is input, an operator cannot visually recognize the first or second program-selection image 14, 22.

Further, in the program unauthorized-use preventing device 10 as described above, it is advantageous that the processing section 20 processes to bring, when the selection of the operation program is performed respectively on both the first program-selection image 14 and the second program-selection image 22, only the desired operation program selected on the second program-selection image 22 into a usable state. According to this configuration, even if the device inherent password 18 set by the device manufacturer is decoded and an operation program is selected illegally on the first program-selection image 14, it is possible to automatically invalidate the illegally obtained operation program by validly selecting the desired operation program on the second program-selection image 22 using the machine-tool inherent password 24. Accordingly, it is possible for the machine-tool manufacturer to prevent the unauthorized-use of the operation program.

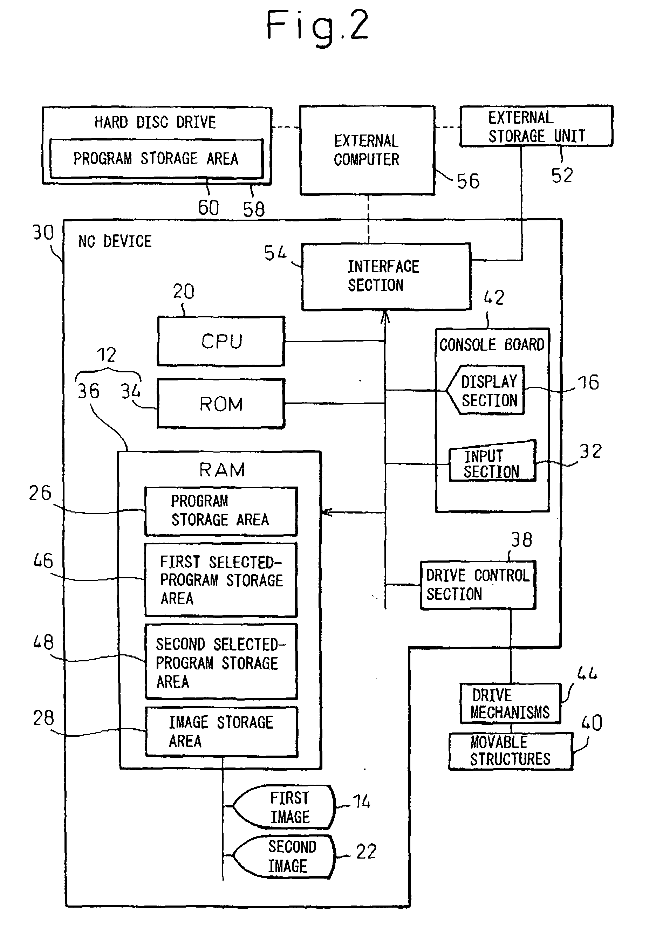

The program unauthorized-use preventing device 10 having the above-described characteristic configuration may be configured to be incorporated into an NC device installed in a numerically controlled machine tool, for carrying out exclusively a program unauthorized-use preventing function that is one of various functions of the NC device. The configuration of an NC device 30 having such a program unauthorized-use preventing function will be described with reference to Fig. 2. Components of the NC device 30 corresponding to the components of the program unauthorized-use preventing device 10 are denoted by common reference numerals, and the explanation thereof is not repeated.

The NC device 30 includes, as basic components for controlling the operation of a numerically controlled machine tool, an input section 32, a display section 16, a processing section (CPU) 20, a storage section 12 (ROM 34 and RAM 36) and a drive control section 38. The input section 32 is provided with, for example, a keyboard including numerical keys (not shown), and acts to permit data (such as tool selection, shapes and dimensions of machined article, rotation speed of spindle, feed speed of tools, etc.) required for controlling the operations of movable structures 40 such as a tool rest, a spindle, a table, etc., as well as machining programs (i.e., block sequences) for various tools, including these data, to be input through the input section 32. The display section 16 is provided with a display unit (not shown), such as CRT (cathode ray tube), LCD (liquid crystal display) or the like, and acts to permit the data and/or the machining program input through the input section 32 to be displayed on the display unit, and to enable an automatic programming accompanying a simulation to be accomplished interactively on the display unit. The input section 32 and the display section 16 are mounted on a console board 42 provided adjacent to the bed of the machine tool.

Basic operation programs for operating the movable structures 40 so as to accomplish desired operations are previously stored in ROM 34 of the storage section 12. Also, data relating to the plural tools and the machining programs containing these data, which are input through the input section 32, are stored in ROM 34 or RAM 36 in accordance with the instruction from CPU 20. CPU 20 outputs an operation command to the drive control section 38 on the basis of various data and machining programs stored in ROM 34 or RAM 36 and the basic operation programs stored in ROM 34. The drive control section 38 controls various drive mechanisms 44 provided in the machine tool in accordance with the operation command from CPU 20, so as to make the drive mechanisms respectively actuate the movable structures 40.

RAM 36 of the storage section 12 includes a program storage area 26 for storing various optional operation programs other than the basic operation programs for the machine tool, an image storage area 28 for storing a first program-selection image 14 permitting the manufacturer of the NC device to select programs and a second program-selection image 22 permitting the manufacturer of the machine tool to select programs, a first selected-program storage area 46 for storing the operation program selected on the first program-selection image 14, and a second selected-program storage area 48 for storing the operation program selected on the second program-selection image 22. Also, in RAM 36, there is provided an area (not shown) for storing an accurate device inherent password 18 (Fig. 1) and an accurate machine-tool inherent password 24 (Fig. 1), which are the references of judgment of password validity. CPU 20 thus processes to make the display section 16 display the first program-selection image 14 when the accurate device inherent password 18 is input through the input section 32, while to make the display section 16 display the second program-selection image 22 when the accurate machine-tool inherent password 24 is input through the input section 32.

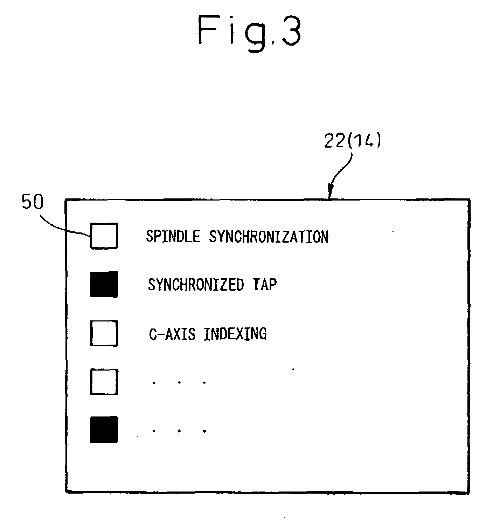

For example, in the case where the machine tool, into which the NC device 30 is installed, is structured as a lathe, the second program-selection image 22 displays, as shown in Fig. 3, a list of program names of various optional operation programs, such as spindle synchronization, synchronized tap, C-axis indexing, etc. An operator can select and designate a desired operation program by pointing, through the input section 32, a box 50 provided close to each program name. Note that, the first program-selection image 14 also has an image-composition basically identical to that of the second program-selection image 22.

The NC device 30 may further include an interface section 54 connectable to an external storage unit 52 storing specific data. In this arrangement, CPU 20 processes, through the interface section 54, to identify the validity of the specific data stored in the external storage unit 52 and bring, only when the specific data are judged to be valid, the desired operation program selected on the second program-selection image 22 into a usable state. According to this configuration, it becomes possible to select the desired operation program, only when, in addition to inputting the machine-tool inherent password 24 through the input section 32, the operator intentionally connects the external storage unit 52 to the interface section 54, and provided that the external storage unit 52 stores valid specific data matching with a predetermined condition (e.g., comparative data stored in RAM 36). As a result, the protective capability of the NC device 30 against the unauthorized-use of operation programs is significantly reinforced.

A flexible disc cartridge (or a floppy disc), a PC card, a compact disc, etc., may be employed as the external storage unit 52. Specific data stored in these external storage units 52 may include period information, serial numbers, volume labels, dummy files, etc. Also, in place of the above configuration in which the external storage unit 52 is directly connected to the interface section 54 and the CPU 20 operates to judge the validity of the specific data, another configuration may be adopted, in which an external computer 56 (e.g., a personal computer), to which the external storage unit 52 can be detachably connected, is connected to the interface section 54, so that the external computer 56 operates to judge the validity of the specific data (shown by a dashed line). In this arrangement, the external computer 56 becomes one component of the NC device 30 as well as of the program unauthorized-use preventing device 10. Also, in this arrangement, a program storage area 60 storing various optional operation programs may be provided in a hard disc drive 58 installed in the external computer 56.

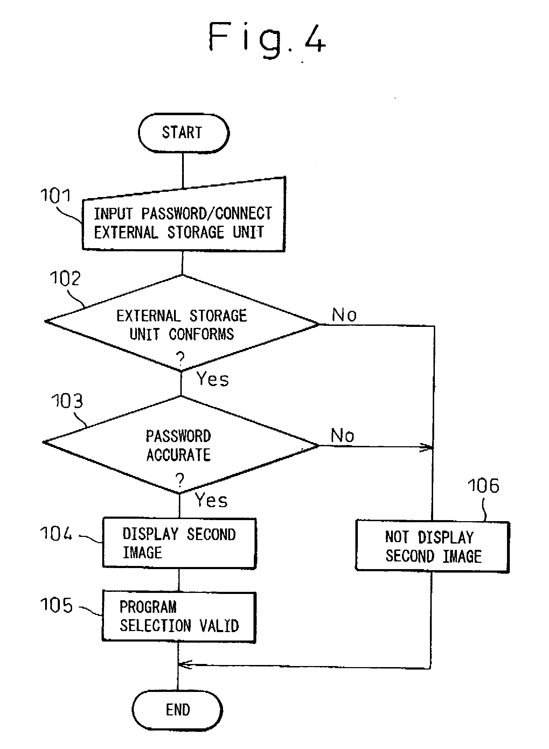

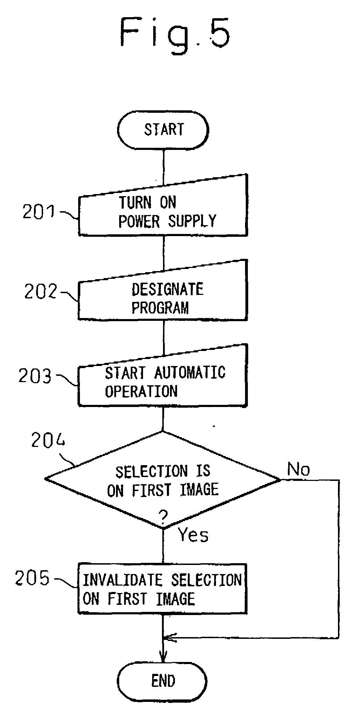

A method of preventing an unauthorized program-use, performed under the control of the NC device 30 having the above configuration, will be described below with reference to flow charts shown in Figs. 4 and 5.

Fig. 4 shows the procedure of preventing the unauthorized-use of programs, performed when an operator selects a desired optional operation program. In this procedure, the operator first inputs the machine-tool inherent password 24 through the input section 32, and connects the external storage unit 52 storing specific data to the interface section 54 (Step 101). Next, in Step 102, CPU 20 judges whether the specific data stored in the external storage unit 52 are valid (i.e., whether the specific data match with the predetermined condition). In this regard, the connection of the external storage unit 52 and the judgment of validity of the specific data are optional steps, and may thus be omitted if improvement of protective capability is not required.

If it is judged that the specific data in the external storage unit 52 is valid, CPU 20 judges, in Step 103, whether the input machine-tool inherent password 24 conforms to the accurate machine-tool inherent password 24 stored in RAM 36. If it is judged that the input machine-tool inherent password 24 conforms to the accurate password 24, CPU 20 reads out, in Step 104, the second program-selection image 22 from the data stored in RAM 36 and makes the display section 16 display the image 22. Thereby, the operator can select a desired operation program on the second program-selection image 22 through the input section 32. Finally, CPU 20 reads out the selected operation program from the data stored in RAM 36 and brings the operation program into a usable (or valid) state (Step 105). The optional operation program brought into the usable state is stored in the second selected-program storage area 48 of RAM 36.

If it is judged, in Step 102, that the specific data stored in the external storage unit 52 are invalid, or if it is judged, in Step 103, that the machine-tool inherent password 24 does not conform to the accurate password, CPU 20 processes, in Step 106, not to make the display section 16 display the second program-selection image 22. Thus, the operator cannot visually recognize the second program-selection image 22, and therefore cannot select a desired optional operation program.

Note that, in place of the above procedure, an alternative procedure may be adopted, in which, after the second program-selection image 22 is displayed in the display section 16 in accordance with the operator's command, the input operation of the machine-tool inherent password 24 and, as occasion demands, the connecting operation of the external storage unit 52 are requested to the operator through the display section 16. In this arrangement, unless the machine-tool inherent password 24 and the external storage unit 52 are judged to be valid, CPU 20 makes it impossible to point the box 50 on the second program-selection image 22, or does not bring the operation program, input by pointing the box 50, into a usable state (i.e., invalidates the selection).

Fig. 5 shows the procedure of preventing the unauthorized-use of programs, performed when an automatic operation is actually started in a machine tool, in which the selection of an optional operation program using the second program-selection image 22 has been completed. In this procedure, the machine tool starts the automatic operation, after an operator turns on a power supply for the machine tool (Step 201), designates an operation program required for a machining process (Step 202), and commands the starting of the automatic operation (Step 203). At an instant when the automatic operation is started, CPU 20 refers to the first selected program storage area 46 of RAM 36 and judges whether the operation program has been selected on the first program-selection image 14 (Step 204). If it is judged that the operation program has been selected, CPU 20 operates, in Step 205, not to bring the operation program selected on the first program-selection image 14 into a usable state (i.e., invalidates the selection). Thereby, it becomes possible to use only the operation program selected on the second program-selection image 22.

As is apparent from the foregoing description, according to the present invention, it becomes possible, in a program unauthorized-use preventing device for preventing the unauthorized-use of various optional operation programs in a machine tool, for the manufacturer of the machine tool to perform the operation for bringing an optionally selected operation program into a usable state when obtaining the use license of the desired operation program, and also the protective capability against the unauthorized-use of operation programs is reinforced.

While some preferred embodiments according to the present invention has been described above, it will be understood that the invention is not restricted to those embodiments, and that various changes and modifications may be made without departing from the disclosure of the claims.

## Claims

1. A program unauthorized-use preventing device comprising:
a storage section for storing various optional operation programs in a machine tool;
a display section for displaying a first program-selection image and a second program-selection image, separately from each other, a desired one of said operation programs being allowed to be selected on respective first and second program-selection images; and
a processing section for processing to read out, when a device inherent password is input, said desired operation program selected on said first program-selection image from said storage section and bring said desired operation program into a usable state, while to read out, when a machine-tool inherent password different from said device inherent password is input, said desired operation program selected on said second program-selection image from said storage section and bring said desired operation program into a usable state.

2. A program unauthorized-use preventing device according to claim 1, wherein said storage section includes a program storage area for storing said various optional operation programs and an image storage area for storing said first and second program-selection images; and wherein said processing section processes to read out, when said device inherent password is input, said first program-selection image from said image storage area and make said display section display said first program-selection image, while to read out, when said machine-tool inherent password is input, said second program-selection image from said image storage area and make said display section display said second program-selection image.

3. A program unauthorized-use preventing device according to claim 1, wherein said processing section processes to bring, when selection of said operation program is performed respectively on said first and second program-selection images, only said desired operation program selected on said second program-selection image into a usable state.

4. A program unauthorized-use preventing device according to claim 1, further comprising an interface section connectable to an external storage unit storing specific data; wherein said processing section processes, through said interface section, to identify a validity of said specific data stored in said external storage unit and bring, only when said specific data are judged to be valid, said desired operation program selected on said second program-selection image into a usable state.

5. A program unauthorized-use preventing device according to claim 1, further comprising an interface section connectable to an external computer in turn connectable to an external storage unit storing specific data; wherein said processing section processes to bring, only when said external computer judges said specific data stored in said external storage unit to be valid, said desired operation program selected on said second program-selection image into a usable state.

6. A program unauthorized-use preventing device according to claim 1, wherein said first and second program-selection images have an image configuration basically identical to each other.

7. A program unauthorized-use preventing device according to claim 1, configured to be incorporated into a numerical control device.
